# EUROPEAN PATENT APPLICATION

(11) **EP 3 226 441 A1**
(43) Date of publication of application: **04.10.2017**
(21) Application number: 16382145.7
(22) Date of filing: 01.04.2016
(51) Int. Cl.: H04B 10/114

(54) **APPARATUS FOR WIRELESS BROAD BAND FIXED ACCESS AND USE OF THIS APPARATUS**

(71) Applicant: Alcatel-Lucent España, S.A., 28050 Madrid (ES)
(72) Inventor: Sanjuan Flores, Tomas, 28050 Madrid (ES); Fernandez Duran, Alfonso, 28050 Madrid (ES)
(74) Representative: Berthier, Karine

(57) **Abstract**

Apparatus for Wireless Broad Band Fixed Access and use of this apparatus; this apparatus comprises two distinct parts, a first part comprising an antenna and a radio frequency module and a second part comprising an intermediate frequency module. The apparatus also comprises optical transmission means configured to allow the transmission of a signal between the two parts of the apparatus.

## Description

### FIELD OF INVENTION

The present subject matter relates to an apparatus dedicated to the reception and transmission of wireless signals more precisely Wireless Broad Band Fixed Access signals. This apparatus is also known as Wireless Broad Band Fixed Access point or Customer Premises Equipment (CPE) or subscriber equipment.

By Fixed Wireless Broad Band Access we mean a system in which 3G, 4G or 5G or any other wireless standard network is used to connect business and homes and allow them to access broadband Internet. These connections usually are not mobile and can benefit from fixed installations using directional with higher gain antennas and stronger power supply at the customer end.

### BACKGROUND

The aim of the present subject matter is to propose an apparatus that can be easily integrated and deployed over or along a building. More precisely when the apparatus is placed on the window glass of a building.

### SUMMARY

This summary is provided to introduce concepts related to apparatus of Wireless Broad Band Fixed Access.

In one implementation, an apparatus for Wireless Broad Band Fixed Access is described. See claim 1. This apparatus comprises two distinct parts, a first part comprising an antenna and a radio frequency module and a second part comprising an intermediate frequency module. The apparatus also comprises optical transmission means configured to allow the transmission of a signal between the two parts of the apparatus.

In one implementation an usage of the previously described apparatus is proposed. In this usage the first part of the apparatus is placed in an outdoor face of a window building and the second part of the apparatus is placed in the indoor face of the window building.

### BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of system/apparatus and/or methods in accordance with embodiments of the present subject matter are now described, by way of example only, and with reference to the accompanying figures, in which:
Figure 1 presents a first embodiment of the apparatus of the present subject matter.
Figure 2 presents a second embodiment of the apparatus of the present subject matter.
Figure 3 presents in another way the embodiments of the present subject matter.
Figure 4-a and 4-b present a use of the apparatus of the present subject matter along a building window.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

### DESCRIPTION OF EMBODIMENTS

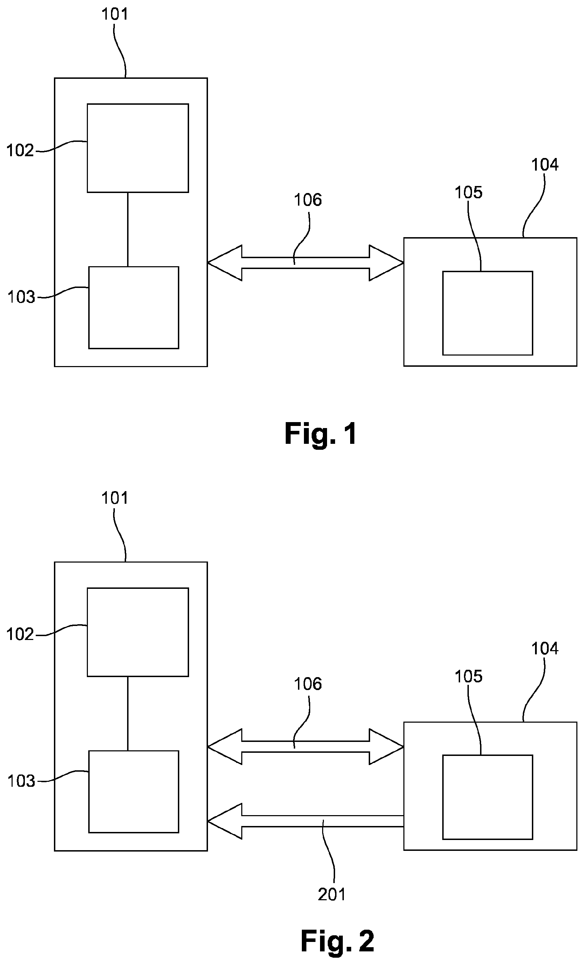

The figure 1 presents a first embodiment of the apparatus for Wireless Broad Band Fixed Access. The apparatus comprises two distinct parts;
- a first part 101 comprising an antenna 102 and a radio frequency (RF) module 103
- A second part 104 comprising an intermediate frequency (IF) module 105
The apparatus also comprises optical transmission means 106 configured to allow the transmission of a signal between the two parts 101 and 104 of the apparatus.

By radio frequency (RF) module 103 or part we mean a part or module of the apparatus handling the higher radio frequency function, typically the over-the-air transmission and reception frequencies. By intermediate frequency (IF) module 105 or part we mean a part or module of the apparatus handling the lower frequency function containing the users transmission and reception data and control data.

In another embodiment the radio frequency (RF) module 103 is called radio module (included within the first part) configured to digital to analogue conversion of the signal transmitted by the second part, the amplification of the analogue signal and the over-the-air transmission of this signal. In this embodiment the intermediate frequency (IF) module 105 is called digital module (included within the second part) and this digital module is configured to realize the transmission and reception of user data and control data and to realize the modulation of the digital signal destined to the first part and the demodulation of the digital signal coming from the first part.

Using the apparatus previously described above we can use the building windows to install this apparatus. Indeed the optical transmission means offer a reliable way of transmitted signal between the two parts of the apparatus even through a window and for a signal of millimeter wavelength.

In another embodiment of the apparatus, the antenna is flat and generally transparent. For example the antenna can be constituted of a transparent substrate, upon which transparent or extremely thin conductors and transparent or extremely thin antenna elements are placed.

By extremely thin conductor or antenna elements we mean a conductor or antenna element constituted of a film with thickness of about one to less than ten micrometers. By extremely thin conductor or antenna element we can also mean a narrower conductor or antenna elements than the substrate area, in a preferred embodiment the conductor or antenna element is so narrow that occupies less than 10% of the substrate surface. For example, if the substrate is a 10cm glass square sheet, the total surface occupied by the conductor on top of it is less than 10% of the area (10cm^2). For example a metal grid over glass, it has some minimal visual impact and the antenna is still dominantly transparent.

The advantage of this extremely thin conductor or antenna element is that they are not perceived by the human eye.

In an embodiment the transparent substrate is made of glass and/or the transparent conductors or transparent antenna elements are made of Indium tin oxide or fluorine doped tin oxide.

Thanks to the transparent antenna the visual impact of the apparatus of the present subject matter is minimal.

The figure 2 presents another embodiment of the apparatus. Compared to the apparatus of the first embodiment, this apparatus also comprises means 201 to supply power from the second part to the first part.

In another embodiment the means 201 to supply power are constituted of;
- an inductive supply receiver, located on the first part 101 and
- an inductive supply transmitter, located in the second part 104.

Thanks to the two previously described embodiments the apparatus can be placed using the building windows. The first part can be placed in the outdoor face of the window and the second part can be placed in the indoor face of the window. The means 201 to supply power allows this type of configuration because there is no need to have a physical connection to supply power to the first part of the apparatus.

In an embodiment of the apparatus the optical transmission means 106 comprises a laser or LED optical source and a laser or LED optical receiver located in both parts of the apparatus.

Laser could provide more optical power in the cross-window interface if needed. LED when possible is a cheaper solution.

In an embodiment of the apparatus the Optical transmission means are configured to transmit at least one signal modulated at an intermediate frequency between the first and the second parts. By intermediate frequency we mean a frequency higher than the bandwidth of the carried data, for example, 1 Ghz or more.

In the previously described embodiment the beam steering has to be handled separately with an additional optical control interface. Otherwise there is the possibility to pass-on antenna control commands through the inductive power interface, since the steering is not dynamic in the customer premises equipment it, is a configuration setting. To include beam steering the preferred embodiment is for simplicity a baseband optical interface.

In an embodiment of the apparatus the Optical transmission means are configured to transmit at least one signal modulated at a radio frequency between the first and the second parts. By radio frequency we mean a frequency in the range 2.6GHz to 60GHz with a preferred value of 38GHz. The transmission of a signal modulated at the radio frequency between the first and second part allow the implementation of flat antennas with electrical beam steering (antenna pointing without physically moving the antenna).

In other words there is two different embodiments regarding the signal transmitted between the first and second part of the apparatus:
- Intermediate frequency modulated signal, this is a signal shifted in frequency from the over the air frequency to a lower one easier to handle frequency. This shift is done in the first part of the apparatus. In this case the optical transmission means 106 carries an optical version of the signal modulated at intermediate frequency for further processing in the second part.
- Baseband signal containing the user and control data passing through Analog to Digital/Digital to Analog conversions. In this case the optical transmission means 106 carries already baseband data.

In an embodiment the signal transmitted between the first and second parts is a digital signal.

In an embodiment of the present subject matter the apparatus is a customer premises equipment (CPE).

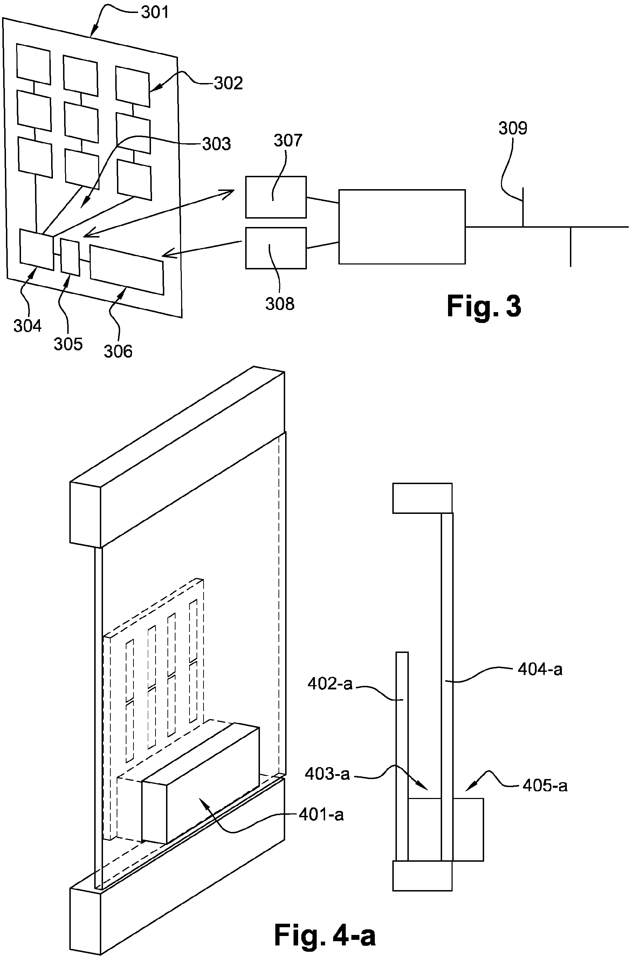

The figure 3 presents in another way the embodiments of the present subject matter. In this figure, the elements 301 to 306 are located in the first part of the apparatus and the elements 307 to 309 are located in the second part of the apparatus. 301 represents the transparent substrate, 302 represents the transparent antenna elements, 303 represents the transparent conductors, 304 represents the radio transceiver and antenna beam steering, 305 represents the optical transceiver, 306 represents the inductive supply receiver, 307 represents the optical transceiver, 308 represents the inductive supply transmitter and 309 represents the user network.

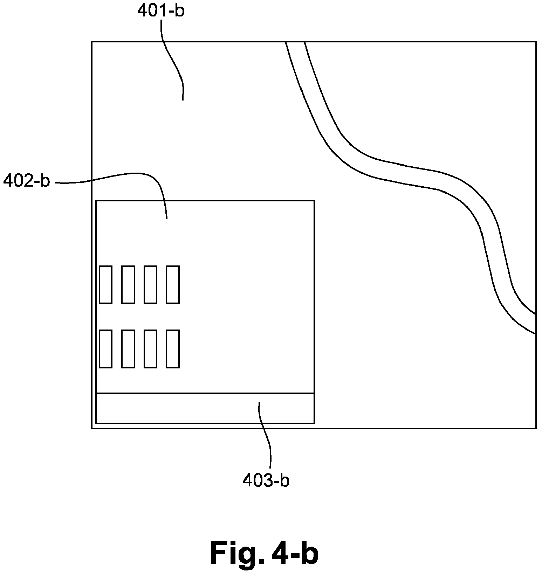

The figure 4-a and 4-b present an usage of the apparatus of the present subject matter.

In the figure 4-a, 401-a and 405-a represents the second part of the apparatus of the present subject matter. This second part comprises the intermediate frequency (IF) fronted the inductive supply transmitter and an optical RF connection. 402-a and 403-a are two elements of the second part of the apparatus. 402-a is a antenna plane, 403-a is the RF fronted the inductive supply receiver and the optical RF connection. 404-a is the window of the building, this window separates the two part of the apparatus, the first part is located in the outside face of the window and the second part is located in the inside face of the window.

In the figure 4-b, 401-b is the window of the building, 402-b is the transparent/non obstructive antenna and 403-b is the front end of the apparatus.

In these use cases the first part of the apparatus is placed on the outdoor face of the window and the second part of the apparatus in places on the indoor face of the window. The communication between the two parts is realized by an optical RF connection, that is an example of optical transmission means and allows the transmission of a signal, for example an signal modulated at an intermediate frequency between the part one and the part two of the apparatus. The apparatus also comprises wireless powering, this is an example of means to supply power from the second part to the first part and this allows the transmission of power from the second part to the first part. This power allows the first part to transmit/receive the RF signal and to do the different operations realized by this first part.

In an embodiment the first and second parts of the apparatus of the present subject matter, comprises one or more processor(s), I/O interface(s), a memory coupled to the processor(s) and transmission means. The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

Some of the functions of the radio frequency (RF) and intermediate frequency (IF) modules are realized by the processor and may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes computer modules and data. The computer modules include routines, programs, objects, components, data structures, etc., which perform particular tasks or implement particular abstract data types. The data, amongst other things, serves as a repository for storing data processed, received, and generated by one or more of the computer modules.

## Claims

1. Apparatus for Wireless Broad Band Fixed Access, comprising two distinct parts;
• a first part (101) comprising an antenna (102) and a radio frequency module (103)
• a second part (104) comprising a intermediate frequency module (105) and
the apparatus also comprises Optical transmission means (106) configured to allow the transmission of a signal between the two parts (101 and 104) of the apparatus.

2. Apparatus according to the claim 1 wherein
The antenna is flat and generally transparent.

3. Apparatus according to the claim 2 wherein
The antenna is constituted of a transparent substrate, upon which transparent or extremely thin conductors and transparent or extremely thin antenna elements are placed.

4. Apparatus according to the claim 3 wherein
the transparent substrate is made of glass and/or
the transparent conductors are made of Indium tin oxide or fluorine doped tin oxide and/or
the transparent antenna elements are made of Indium tin oxide or fluorine doped tin oxide.

5. Apparatus according to any of the previous claims also comprising means (201) to supply power from the second part to the first part.

6. Apparatus according to claim 5 wherein the means (201) to supply power are constituted of:
• an inductive supply receiver, located on the first part (101) and
• an inductive supply transmitter, located in the second part (104).

7. Apparatus according to any of the previous claims
wherein the Optical transmission means (106) comprises a laser or LED optical source and a laser or LED optical receiver located in both parts of the apparatus.

8. Apparatus according to any of the previous claims wherein
the Optical transmission means (106) are configured to transmit at least one signal modulated at an intermediate frequency between the first and the second part.

9. Apparatus according to any of the previous claims wherein the access point is a customer premises equipment (CPE).

10. Use of the apparatus of any of the previous claims wherein:
• the first part is placed in an outdoor face of a window building and
• the second part is placed in the indoor face of the window building.

## Amended claims

### Amended claims in accordance with Rule 137(2) EPC.

1. Apparatus for Wireless Broad Band Fixed Access, comprising two distinct parts;
• a first part (101) comprising an antenna (102) and a radio frequency module (103)
• a second part (104) comprising a intermediate frequency module (105) and
the apparatus also comprises Optical transmission means (106) configured to allow the transmission of a signal between the two parts (101 and 104) of the apparatus wherein the first part (101) is configured to be placed on an outdoor face of a window building and the second part (102) is configured to be placed on an indoor face of the window building.

2. Apparatus according to the claim 1 wherein
The antenna is flat and generally transparent.

3. Apparatus according to the claim 2 wherein
The antenna is constituted of a transparent substrate, upon which transparent or extremely thin conductors and transparent or extremely thin antenna elements are placed.

4. Apparatus according to the claim 3 wherein
the transparent substrate is made of glass and/or
the transparent conductors are made of Indium tin oxide or fluorine doped tin oxide and/or
the transparent antenna elements are made of Indium tin oxide or fluorine doped tin oxide.

5. Apparatus according to any of the previous claims also comprising means (201) to supply power from the second part to the first part.

6. Apparatus according to claim 5 wherein the means (201) to supply power are constituted of:
• an inductive supply receiver, located on the first part (101) and
• an inductive supply transmitter, located in the second part (104).

7. Apparatus according to any of the previous claims
wherein the Optical transmission means (106) comprises a laser or LED optical source and a laser or LED optical receiver located in both parts of the apparatus.

8. Apparatus according to any of the previous claims wherein
the Optical transmission means (106) are configured to transmit at least one signal modulated at an intermediate frequency between the first and the second part.

9. Apparatus according to any of the previous claims wherein the apparatus is a customer premises equipment (CPE).

10. Use of the apparatus of any of the previous claims wherein:
• the first part is placed in an outdoor face of a window building and
• the second part is placed in the indoor face of the window building.
